# EUROPÄISCHE PATENTSCHRIFT

(11) **EP 3 624 929 B1**
(45) Veröffentlichungstag und Bekanntmachung des Hinweises auf die Patenterteilung: **05.07.2023**
(21) Anmeldenummer: 18725218.4
(22) Anmeldetag: 17.05.2018
(51) Int. Cl.: B01F 23/232, B01F 25/10, B01F 25/314, B01F 25/433, B01F 35/71, H01M 8/0606

(54) **FLUIDMISCHVORRICHTUNG UND REFORMER UND UNTERSEEBOOT MIT EINER SOLCHEN FLUIDMISCHVORRICHTUNG**
FLUID-MIXING DEVICE AND REFORMER AND SUBMARINE WITH SAID FLUID-MIXING DEVICE
DISPOSITIF DE MÉLANGE DE FLUIDES ET REFORMEUR ET SOUS-MARIN AVEC LEDIT DISPOSITIF DE MÉLANGE

(30) Priorität: 19.05.2017 DE 102017208570
(43) Veröffentlichungstag der Anmeldung: 25.03.2020
(73) Patentinhaber: thyssenkrupp Marine Systems GmbH, 24143 Kiel (DE); thyssenkrupp AG, 45143 Essen (DE)
(72) Erfinder: DUSKE, Alexander, 25364 Brande-Hoernerkirchen (DE); KOCK, Flemming, 24220 Flintbek (DE); KOLBINGER, Marinus, 82541 Münsing (DE); STAACK, Ingo, 24217 Schoenberg (DE)
(74) Vertreter: thyssenkrupp Intellectual Property GmbH
(86) Internationale Anmeldenummer: PCT/EP2018/062840
(87) Internationale Veröffentlichungsnummer: WO 2018/210984

(56) Entgegenhaltungen:
- EP-A2- 0 402 567
- DE-C1- 4 237 349
- US-A- 2 361 150

## Beschreibung

Die Erfindung betrifft eine Fluidmischvorrichtung, welche ein erstes Fluid und ein zweites Fluid bei minimaler Bauhöhe und geringem Strömungswiderstand effizient vermischt.

In modernen nicht-nuklearen Unterseebooten werden zunehmend Brennstoffzellen zur außenluftunabhängigen Energieversorgung eingesetzt. Für deren Betrieb ist Wasserstoff notwendig, der entweder direkt gespeichert wird oder mittels eines Reformers beispielsweise aus Methanol erzeugt wird. Der Reformer besitzt neben dem Reaktor, in welchem Wasserstoff erzeugt wird, eine Oxidationseinheit, in welcher beispielsweise Methanol mit Sauerstoff verbrannt wird, um die notwendige Energie zu erzeugen. Hierbei soll eine möglichst effiziente Verbrennung erfolgen, um Treibstoff zu sparen. Zum anderen muss der Reformer in die beengte Umgebung eines Unterseeboots eingebaut werden. Die Oxidationseinheit weist üblicherweise wenigstens zwei, regelmäßig mehr Oxidationsstufen auf, wobei zwischen den Oxidationsstufen Sauerstoff zu dosiert wird. Daher ist es notwendig, auf kleinstem Raum die beiden Gasströme gut zu vermischen. Gleichzeitig sollte aber auch der Druckverlust so gering wie möglich gehalten werden, da dieser einen unmittelbaren Einfluss auf die Effizienz des Systems hat.

Aus der US 8,622,715 B1 ist eine Düse mit einem ersten und einem zweiten elliptischen Abschnitt bekannt.

Aus der DE 42 37 349 C2 ist eine Vorrichtung zum Aufschäumen von Baustoffen bekannt.

Aus der US 2,361,150 A ist ein Verfahren zum Einbringen von Chlor in einen Flüssigkeitsstrom, das Feststoffe in Suspension hält, und zum Dispergieren des Chlors im gesamten Flüssigkeitskörper bekannt.

Aus der EP 0 402 567 A2 ist ein Verfahren zum Entfernen von gelösten Gasen und flüchtigen organischen Chemikalien aus einer Flüssigkeit bekannt.

Aufgabe der Erfindung ist es, eine Fluidmischvorrichtung zu schaffen, welche Fluid bei kleiner Bauhöhe und geringem Strömungswiderstand zwei Fluide effizient vermischt.

Gelöst wird diese Aufgabe durch eine Fluidmischvorrichtung mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Fluidmischvorrichtung weist wenigstens einen Vorbereich, einen Zugabebereich und einen Mischbereich auf, wobei der Vorbereich vor dem Zugabebereich und der Zugabebereich vor dem Mischbereich angeordnet sind. Ein erstes Fluid wird in einer primären Fluidströmung vom Vorbereich über den Zugabebereich zum Mischbereich geführt. Der Zugabebereich weist eine kleinere Querschnittsfläche als der Vorbereich auf. Der Zugabebereich weist ebenfalls eine kleinere Querschnittsfläche als der Mischbereich auf. Der Zugabebereich weist wenigstens einen ersten Querschnittsbereich und einen zweiten Querschnittsbereich auf, wobei der erste Querschnittsbereich und der zweite Querschnittsbereich miteinander verbunden sind. Der erste Querschnittsbereich und der zweite Querschnittsbereich sind dabei nebeneinander angeordnet. Der erste Querschnittsbereich und der zweite Querschnittsbereich weisen eine Ausdehnung in Richtung der primären Fluidströmung auf. Das primäre Fluid durchströmt somit beide Querschnittsbereiche parallel. Der Mischbereich weist wenigstens eine erste erste Fluidzuführung für ein zweites Fluid zum ersten Querschnittsbereich und wenigstens eine zweite erste Fluidzuführung für ein zweites Fluid zum zweiten Querschnittsbereich auf.

Durch die Auftrennung in zwei Querschnittsbereiche wird das zweite Fluid in eine kleinere Fluidströmung eingeführt, was eine Durchmischung vereinfacht. Da die Querschnittsbereiche jedoch verbunden sind und nicht getrennt vorliegen erfolgt eine gute Durchmischung im anschließenden Mischbereich, sodass es sich nicht einfach um zwei nebeneinanderliegende kleine Fluidmischvorrichtungen handelt. Hierdurch wird bei kompakter Bauhöhe eine sehr gute Durchmischung erreicht.

Als Fluide kommen hier primär Gase zur Anwendung, insbesondere Sauerstoff, Stickstoff, Wasserstoff, Kohlenmonoxid, Kohlendioxid, Argon, Wasser, Methanol, Methan und dergleichen, sowohl als Reinstoff als auch in Form verschiedener Mischungen hieraus. Beispielsweise Wasser oder Methanol könnten auch beispielsweise in flüssiger Form zugeführt werden und in der Mischvorrichtung aufgrund der vorherrschenden Temperaturen in die Gasphase übergehen.

Der erste Querschnittsbereich weist eine erste Zugabeströmung auf und der zweite Querschnittsbereich weist eine zweite Zugabeströmung auf. Wesentlich ist, dass der erste Querschnittsbereich eine erste Zugabeströmung aufweist und der zweite Querschnittsbereich davon getrennt eine eigene zweite Zugabeströmung aufweist. Hierdurch entstehen kleinere Zugabeströmungen, wodurch eine schnellere und effizientere Mischung erfolgt. Insbesondere handelt es sich bei der ersten Zugabeströmung um eine erste spiralförmige Strömung und bei der zweiten Zugabeströmung um eine zweite spiralförmige Strömung. Die erste Zugabeströmung und die zweite Zugabeströmung weisen im Bereich, in dem der erste Querschnittsbereich und der zweite Querschnittsbereich (34) miteinander verbunden sind, bevorzugt eine parallele Strömung zueinander auf.

Erfindungsgemäß weisen der erste Querschnittsbereich und der zweite Querschnittsbereich jeweils eine abgerundete Form, bevorzugt eine runde, ovale oder elliptische Form, auf. Durch die abgerundete Form entstehen weniger Bereiche mit verringerter Strömungsgeschwindigkeit und somit ergibt sich eine bessere Durchmischung.

Erfindungsgemäß bildet sich im ersten Querschnittsbereich eine erste Fluidteilströmung und im zweiten Querschnittsbereich eine zweite Fluidteilströmung aus, wobei die erste Fluidteilströmung und die zweite Fluidteilströmung rotierend sind. Durch eine rotierende Fluidteilströmung kann die Durchmischung weiter verbessert werden.

In einer besonders bevorzugt Ausführungsform der Erfindung weisen der erste Querschnittsbereich und der zweite Querschnittsbereich jeweils eine abgerundete Form auf und es bildet sich im ersten Querschnittsbereich eine erste Fluidteilströmung und im zweiten Querschnittsbereich eine zweite Fluidteilströmung aus, wobei die erste Fluidteilströmung und die zweite Fluidteilströmung rotierend sind. Durch die abgerundete Form wird die rotierende Strömung unterstützt.

In einer weiteren Ausführungsform der Erfindung weisen die erste Fluidteilströmung und die zweite Fluidteilströmung eine gegenläufige Rotation auf. Hierdurch ergibt sich eine extrem gute Durchmischung im Mischbereich.

In einer weiteren Ausführungsform der Erfindung weist der Mischbereich wenigstens eine erste zweite Fluidzuführung für ein drittes Fluid zum ersten Querschnittsbereich und wenigstens eine zweite zweite Fluidzuführung für ein drittes Fluid zum zweiten Querschnittsbereich auf.

In einer weiteren Ausführungsform der Erfindung wird die Rotation der Fluidteilströme durch die Zuführung des zweiten Fluids erzeugt. Indem das zweite Fluid quer oder wenigstens mit einer Geschwindigkeitskomponente quer zur Strömungsrichtung zugeführt wird, kann eine Rotation des Fluidteilströme induziert werden. Bevorzugt ist die Zuführungsflussrichtung des zweiten Fluids senkrecht zur primären Fluidströmung. Besonders bevorzugt ist die Zuführungsflussrichtung des zweiten Fluids nicht auf die Mitte des Querschnittsbereichs gerichtet. Damit ist die Zuführungsflussrichtung des zweiten Fluids derart versetzt von der Mitte, dass hierdurch eine Rotation erzeugt wird. Weiter bevorzugt ist die Zuführungsflussrichtung des zweiten Fluids derart gerichtet, dass die Zuführungsflussrichtung des zweiten Fluids eine gedachte Senkrechte zur Zuführungsflussrichtung, welche durch die Mitte des Querschnittsbereichs verläuft, derart schneidet, dass der Abstand zwischen dem Schnittpunkt und der Mitte größer ist das der Abstand zwischen dem Schnittpunkt und der Außenseite des Querschnittsbereichs.

In einer weiteren Ausführungsform der Erfindung wird die Rotation der Fluidteilströme durch die an den Vorbereich grenzende Form des Zugabebereichs erzeugt. Dieses kann alternativ oder zusätzlich zur Erzeugung der Rotation durch Zuführung des zweiten Fluids erfolgen.

In einer weiteren Ausführungsform der Erfindung wird das zweite Fluid entgegen der Rotationsrichtung der Fluidteilströme zugeführt. Durch das der Hauptströmung entgegen gerichtete Zuführen kann eine effiziente turbulente Vermischung erreicht werden.

In einer weiteren Ausführungsform der Erfindung weist der Zugabebereich einen dritten Querschnittsbereich und einen vierten Querschnittsbereich auf. Insbesondere sind die Mittelpunkte der Querschnittsbereiche an den Ecken eines Quadrats angeordnet sind. Besonders bevorzugt weisen die Strömungen in direkt benachbarten Querschnittsbereichen eine entgegengesetzte Rotationsrichtung der Strömung auf.

In einer weiteren Ausführungsform der Erfindung weist der Zugabebereich einen fünften Querschnittsbereich und einen sechsten Querschnittsbereich auf. Besonders bevorzugt weisen die Strömungen in direkt benachbarten Querschnittsbereichen eine entgegengesetzte Rotationsrichtung der Strömung auf.

In einer weiteren Ausführungsform der Erfindung beträgt das Massenverhältnis bezogen auf den zeitlichen Durchfluss zwischen dem ersten Fluid und dem zweiten Fluid zwischen 1:1 und 1:1000, bevorzugt zwischen 1:5 und 1:100, besonders bevorzugt zwischen 1:15 und 1:40.

In einer weiteren Ausführungsform haben der erste und der zweite Querschnittsbereich einen Durchmesser von 1 mm bis 20 mm, bevorzugt zwischen 1 mm und 10 mm, besonders bevorzugt zwischen 1 mm und 5 mm. Besonders bevorzugt sind die Durchmesser beider Bereiche gleich.

In einer weiteren Ausführungsform ist der Durchmesser der Zuführung des zweiten Fluids beim Zugabebereich zwischen 0,05 mm und 10 mm, bevorzugt zwischen 0,05 mm und 5 mm, besonders bevorzugt zwischen 0,05 mm und 1 mm. Besonders bevorzugt sind die Durchmesser beider aller Zuführungen gleich.

In einer weiteren Ausführungsform ist die Zuführung des zweiten Fluids eine Düse, wobei die Düse derart angeordnet ist, dass die Spitze der Düse mit der Innenwandung des Querschnittsbereichs endet. Bevorzugt ist die Düse auswechselbar angeordnet.

In einem weiteren Aspekt betrifft die Erfindung einen Reformer mit wenigstens einer erfindungsgemäßen Fluidmischvorrichtung, wobei die Fluidmischvorrichtung in einer Oxidationseinheit des Reformers angeordnet ist.

In einem weiteren Aspekt betrifft die Erfindung ein Unterseeboot mit einem erfindungsgemäßen Reformer.

Besonders bevorzugt wird die erfindungsgemäße Fluidmischvorrichtung aufgrund des komplexen inneren Aufbaus mittels additiver Fertigungstechniken hergestellt. Additive Fertigungstechniken erlauben gerade auch filigrane Gaszuführungen in einer extrem komplexen Geometrie.

Nachfolgend ist die erfindungsgemäße Fluidmischvorrichtung anhand eines in den Zeichnungen dargestellten Ausführungsbeispiels näher erläutert.
- Fig. 1: vertikaler Querschnitt durch eine Fluidmischvorrichtung
- Fig. 2: horizontaler Querschnitt durch eine Fluidmischvorrichtung

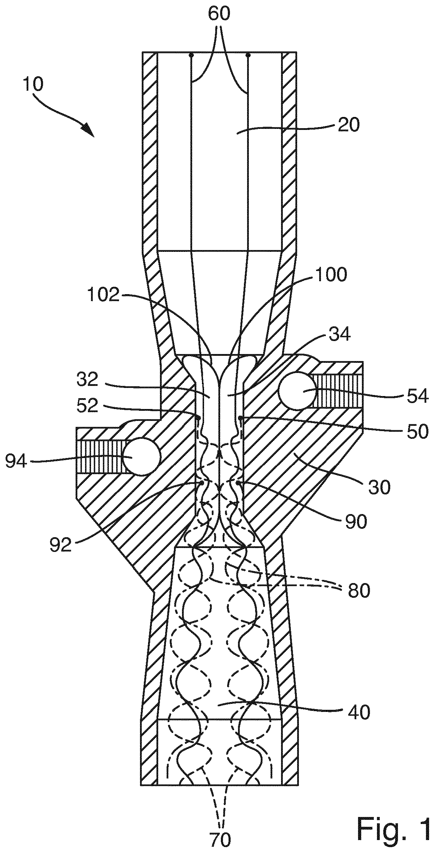

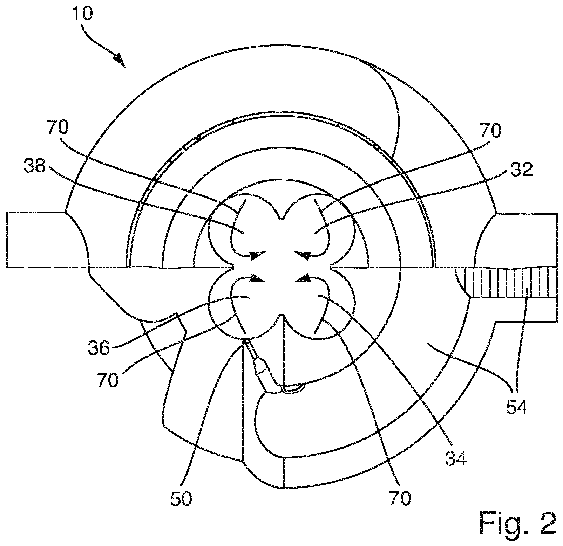

Fig. 1 und Fig. 2 zeigen eine beispielshafte erfindungsgemäße Fluidmischvorrichtung 10 mit vier kleeblattförmig angebrachten Querschnittsbereichen 32, 34, 36, 38. Die Fluidmischvorrichtung 10 weist einen Vorbereich 20, einen Zugabebereich 30 und einen Mischbereich 40 auf, welche von oben nach unten angeordnet sind. Der Durchmesser des Zugabebereichs 30 ist deutlich geringer als der Durchmesser des Vorbereichs 20 und des Mischbereichs 40. Hierdurch und insbesondere durch die Form es ersten Einlasses 100 und des zweiten Einlasses 102 (sowie des nicht gezeigten dritten Einlasses und des nicht gezeigten vierten Einlasses) ergibt sich eine rotierende Strömung des ersten Fluids 60. Die Einlässe 100, 102 sind die an den Vorbereich 20 grenzende Form des Zugabebereichs 30. In diesen Fluidstrom wird ein zweites Fluid 70 durch eine erste erste Fluidzuführung 50 und eine zweite erste Fluidzuführung 52 sowie durch zwei weitere, hier nicht dargestellte Fluidzuführungen eingeleitet. Zur Vereinfachung sind der Strom des zweiten Fluids 70 und des dritten Fluids 80 hier so dargestellt, als würden sich die Fluidströme nicht vollständig vermischen, was jedoch in Realität passiert. Dieses dient der Veranschaulichung. Das zweite Fluid 70 wird dabei über eine erste Fluidversorgung 54 zu den ersten Fluidzuführung 50, 52 geführt. Bei dem ersten Fluid 60 handelt es sich beispielsweise und insbesondere um bei einer Verbrennung von Methanol auftretendes Gasgemisch bei unvollständiger Umsetzung. Das zweite Fluid 70 ist beispielsweise und insbesondere Sauerstoff. Zusätzlich wird in der gezeigten Fluidmischvorrichtung ein drittes Fluid 80, beispielsweise ein Inertgas, zum Beispiel Stickstoff, über eine erste zweite Fluidzuführung 90 und eine zweite zweite Fluidzuführung 92 sowie durch zwei weitere, hier nicht dargestellte Fluidzuführungen eingeleitet. Das dritte Fluid 80 wird durch eine zweite Fluidversorgung 94 zu den zweiten Fluidzuführungen 90, 92 geführt. In Fig. 2 ist die Zuführung des zweiten Fluids 70 durch vier erste Fluidzuführungen gezeigt, wobei zur Vereinfachung nur die erste erste Fluidzuführung 50 dargestellt ist. Jeweils eine erste Fluidzuführung führt zweites Fluid 70 in einen der Querschnittsbereiche 32, 34, 36, 38. Es ist erkennbar, dass der erste Querschnittsbereich 32 und der zweite Querschnittsbereich 34 miteinander verbunden sind. Ebenso sind der zweite Querschnittsbereich 34 und der dritte Querschnittsbereich 36 miteinander verbunden, der dritte Querschnittsbereich 36 und der vierten Querschnittsbereich 38 miteinander verbunden sowie der vierte Querschnittsbereich 38 und der dritte Querschnittsbereich 36 miteinander verbunden. Hierdurch ergibt sich zum einen das Aussehen ähnlich einem Kleeblatt und funktional eine gute Durchmischung der Fluide 60, 70, 80 im Mischbereich 40.

Selbstverständlich kann durch zweiten Fluidzuführungen 90, 92 alternativ auch das zweite Fluid 70 eingebracht werden.

### Bezugszeichen

- 10: Fluidmischvorrichtung
- 20: Vorbereich
- 30: Zugabebereich
- 32: erste Querschnittsbereich
- 34: zweite Querschnittsbereich
- 36: dritte Querschnittsbereich
- 38: vierte Querschnittsbereich
- 40: Mischbereich
- 50: erste erste Fluidzuführung
- 52: zweite erste Fluidzuführung
- 54: erste Fluidversorgung
- 60: erstes Fluid
- 70: zweites Fluid
- 80: drittes Fluid
- 90: erste zweite Fluidzuführung
- 92: zweite zweite Fluidzuführung
- 94: zweite Fluidversorgung
- 100: erster Einlass
- 102: zweiter Einlass

## Patentansprüche

1. Fluidmischvorrichtung (10), wobei die Fluidmischvorrichtung (10) wenigstens einen Vorbereich (20), einen Zugabebereich (30) und einen Mischbereich (40) aufweist, wobei der Vorbereich (20) vor dem Zugabebereich (30) angeordnet ist, wobei der Zugabebereich (30) vor dem Mischbereich (40) angeordnet ist, wobei ein erstes Fluid (60) in einer primären Fluidströmung vom Vorbereich (20) über den Zugabebereich (30) zum Mischbereich (40) geführt werden kann, wobei der Zugabebereich (30) eine kleinere Querschnittsfläche aufweist als der Vorbereich (20), wobei der Zugabebereich (30) eine kleinere Querschnittsfläche aufweist als der Mischbereich (40), wobei der Zugabebereich (30) wenigstens einen ersten Querschnittsbereich (32) und einen zweiten Querschnittsbereich (34) aufweist, wobei der erste Querschnittsbereich (32) eine erste Zugabeströmung aufweisen kann, wobei der zweite Querschnittsbereich (34) eine zweite Zugabeströmung aufweisen kann, wobei der erste Querschnittsbereich (32) und der zweite Querschnittsbereich (34) miteinander verbunden sind und nebeneinander angeordnet sind, wobei der Mischbereich (40) wenigstens eine erste erste Fluidzuführung (50) für ein zweites Fluid (70) zum ersten Querschnittsbereich (32) und wenigstens eine zweite erste Fluidzuführung (52) für ein zweites Fluid (70) zum zweiten Querschnittsbereich (34) aufweist, **dadurch gekennzeichnet, dass** der erste Querschnittsbereich (32) und der zweite Querschnittsbereich (34) jeweils eine abgerundete Form aufweisen und so ausgeformt sind, dass sich im ersten Querschnittsbereich eine erste Fluidteilströmung und im zweiten Querschnittsbereich eine zweite Fluidteilströmung ausbilden kann, wobei die erste Fluidteilströmung und die zweite Fluidteilströmung rotierend sind.

2. Fluidmischvorrichtung (10) nach Anspruch 1, **dadurch gekennzeichnet, dass** der erste Querschnittsbereich (32) und der zweite Querschnittsbereich (34) jeweils eine runde, ovale oder elliptische Form aufweisen.

3. Fluidmischvorrichtung (10) nach einem der vorstehenden Ansprüche, **dadurch gekennzeichnet, dass** der Mischbereich (40) wenigstens eine erste zweite Fluidzuführung (90) für ein drittes Fluid (80) zum ersten Querschnittsbereich (32) und wenigstens eine zweite zweite Fluidzuführung (92) für ein drittes Fluid (80) zum zweiten Querschnittsbereich (34) aufweist.

4. Fluidmischvorrichtung (10) nach einem der vorstehenden Ansprüche, **dadurch gekennzeichnet, dass** der Zugabebereich (30) einen dritten Querschnittsbereich (36) und einen vierten Querschnittsbereich (38) aufweist.

5. Fluidmischvorrichtung (10) nach Anspruch 4, **dadurch gekennzeichnet, dass** die Mittelpunkte der Querschnittsbereiche (32, 34, 36, 38) an den Ecken eines Quadrats angeordnet sind.

6. Fluidmischvorrichtung (10) nach Anspruch 4, **dadurch gekennzeichnet, dass** der Zugabebereich (30) einen fünften Querschnittsbereich und einen sechsten Querschnittsbereich aufweist.

7. Reformer mit wenigstens einer Fluidmischvorrichtung (10) nach einem der vorstehenden Ansprüche, wobei die Fluidmischvorrichtung (10) in einer Oxidationseinheit des Reformers angeordnet ist.

8. Unterseeboot mit einem Reformer nach Anspruch 7.

## Claims

1. Fluid-mixing device (10), wherein the fluid-mixing device (10) has at least one pre-region (20), one addition region (30) and one mixing region (40), wherein the pre-region (20) is arranged before the addition region (30), wherein the addition region (30) is arranged before the mixing region (40), wherein a first fluid (60) can be guided in a primary fluid flow from the pre-region (20) to the mixing region (40) via the addition region (30), wherein the addition region (30) has a smaller cross-sectional area than the pre-region (20), wherein the addition region (30) has a smaller cross-sectional area than the mixing region (40), wherein the addition region (30) has at least one first cross-sectional region (32) and one second cross-sectional region (34), wherein the first cross-sectional region (32) may have a first addition flow, wherein the second cross-sectional region (34) may have a second addition flow, wherein the first cross-sectional region (32) and the second cross-sectional region (34) are connected to one another and are arranged next to one another, wherein the mixing region (40) has at least one first first fluid supply (50) for a second fluid (70) to the first cross-sectional region (32) and has at least one second first fluid supply (52) for a second fluid (70) to the second cross-sectional region (34), **characterized in that** the first cross-sectional region (32) and the second cross-sectional region (34) each have a rounded shape and are formed in such a way that a first partial fluid flow can form in the first cross-sectional region and a second partial fluid flow can form in the second cross-sectional region, wherein the first partial fluid flow and the second partial fluid flow are rotating flows.

2. Fluid-mixing device (10) according to Claim 1, **characterized in that** the first cross-sectional region (32) and the second cross-sectional region (34) each have a round, oval or elliptical shape.

3. Fluid-mixing device (10) according to either of the preceding claims, **characterized in that** the mixing region (40) has at least one first second fluid supply (90) for a third fluid (80) to the first cross-sectional region (32) and has at least one second second fluid supply (92) for a third fluid (80) to the second cross-sectional region (34).

4. Fluid-mixing device (10) according to one of the preceding claims, **characterized in that** the addition region (30) has a third cross-sectional region (36) and a fourth cross-sectional region (38).

5. Fluid-mixing device (10) according to Claim 4, **characterized in that** the centre points of the cross-sectional regions (32, 34, 36, 38) are arranged at the corners of a square.

6. Fluid-mixing device (10) according to Claim 4, **characterized in that** the addition region (30) has a fifth cross-sectional region and a sixth cross-sectional region.

7. Reformer having at least one fluid-mixing device (10) according to one of the preceding claims, wherein the fluid-mixing device (10) is arranged in an oxidation unit of the reformer.

8. Submarine having a reformer according to Claim 7.

## Revendications

1. Dispositif de mélange de fluides (10), le dispositif de mélange de fluides (10) présentant au moins une zone préliminaire (20), une zone d'ajout (30) et une zone de mélange (40), la zone préliminaire (20) étant agencée avant la zone d'ajout (30), la zone d'ajout (30) étant agencée avant la zone de mélange (40), un premier fluide (60) pouvant être acheminé dans un courant de fluide primaire de la zone préliminaire (20) à la zone de mélange (40) par l'intermédiaire de la zone d'ajout (30),
la zone d'ajout (30) présentant une surface de section transversale plus petite que la zone préliminaire (20), la zone d'ajout (30) présentant une surface de section transversale plus petite que la zone de mélange (40), la zone d'ajout (30) présentant au moins une première zone de section transversale (32) et une deuxième zone de section transversale (34), la première zone de section transversale (32) pouvant présenter un premier courant d'ajout, la deuxième zone de section transversale (34) pouvant présenter un deuxième courant d'ajout, la première zone de section transversale (32) et la deuxième zone de section transversale (34) étant reliées l'une à l'autre et étant agencées côte à côte, la zone de mélange (40) présentant au moins une première première amenée de fluide (50) pour un deuxième fluide (70) vers la première zone de section transversale (32) et au moins une deuxième première amenée de fluide (52) pour un deuxième fluide (70) vers la deuxième zone de section transversale (34), **caractérisé en ce que** la première zone de section transversale (32) et la deuxième zone de section transversale (34) présentent chacune une forme arrondie et sont formées de telle sorte qu'un premier courant partiel de fluide peut se former dans la première zone de section transversale et un deuxième courant partiel de fluide peut se former dans la deuxième zone de section transversale, le premier courant partiel de fluide et le deuxième courant partiel de fluide étant rotatifs.

2. Dispositif de mélange de fluides (10) selon la revendication 1, **caractérisé en ce que** la première zone de section transversale (32) et la deuxième zone de section transversale (34) présentent chacune une forme ronde, ovale ou elliptique.

3. Dispositif de mélange de fluides (10) selon l'une quelconque des revendications précédentes, **caractérisé en ce que** la zone de mélange (40) présente au moins une première deuxième amenée de fluide (90) pour un troisième fluide (80) vers la première zone de section transversale (32) et au moins une deuxième deuxième amenée de fluide (92) pour un troisième fluide (80) vers la deuxième zone de section transversale (34).

4. Dispositif de mélange de fluides (10) selon l'une quelconque des revendications précédentes, **caractérisé en ce que** la zone d'ajout (30) présente une troisième zone de section transversale (36) et une quatrième zone de section transversale (38).

5. Dispositif de mélange de fluides (10) selon la revendication 4, **caractérisé en ce que** les centres des zones de section transversale (32, 34, 36, 38) sont agencés aux coins d'un carré.

6. Dispositif de mélange de fluides (10) selon la revendication 4, **caractérisé en ce que** la zone d'ajout (30) présente une cinquième zone de section transversale et une sixième zone de section transversale.

7. Reformeur comprenant au moins un dispositif de mélange de fluide (10) selon l'une quelconque des revendications précédentes, le dispositif de mélange de fluide (10) étant agencé dans une unité d'oxydation du reformeur.

8. Sous-marin comprenant un reformeur selon la revendication 7.
